(19) Europäisches Patentamt

European Patent Office

Office européen des brevets

(11) **EP 0 998 971 A2**

(12) **EUROPÄISCHE PATENTANMELDUNG**

(43) Veröffentlichungstag:
10.05.2000 Patentblatt 2000/19

(51) Int. Cl.$^7$: **B01D 61/44**, C02F 1/46

(21) Anmeldenummer: 99118248.6

(22) Anmeldetag: 14.09.1999

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **29.10.1998 DE 19849922**

(71) Anmelder:
**Degussa-Hüls Aktiengesellschaft
60287 Frankfurt am Main (DE)**

(72) Erfinder:
• **Wiese, Klaus-Diether, Dr.
45721 Haltern (DE)**
• **Jakob, Antje, Dr.
27283 Verden (DE)**
• **Kuppinger, Franz-Felix, Dr.
45768 Marl (DE)**

(54) **Verfahren zur Behandlung von Basen und organischen Säuren enthaltenden wässrigen Lösungen**

(57) Bei den herkömmlichen Verfahren zur Behandlung von Basen und organische Säuren enthaltenden wäßrigen Lösungen wurde immer nur einer der beiden Bestandteile aus der Lösung entfernt. Zur Entfernung des zweiten Bestandteils der Lösung waren zusätzliche Verfahrensschritte notwendig, die den technischen wie finanziellen Aufwand erheblich vergrößerten.

Die vorliegende Erfindung betrifft deshalb ein Verfahren zur Behandlung von Basen und organischen Säuren enthaltenden wäßrigen Lösungen mittels eines elektrochemischen Verfahrens.

Das erfindungsgemäße Verfahren wird unter anderem zur Reinigung von bei der Herstellung von Carbonylverbindungen anfallenden Reaktionswassern genutzt.

Fig. 1

EP 0 998 971 A2

**Beschreibung**

Die vorliegende Erfindung betrifft ein Verfahren zur Behandlung von Basen und organische Säuren enthaltenden wäßrigen Lösungen.

Insbesondere betrifft die Erfindung ein Verfahren zur Reinigung des Prozeßwassers bei Aldolisierungsreaktionen.

Bei vielen basisch katalysierten Kondensationsreaktionen von organischen Verbindungen, insbesondere bei der Umsetzung von Aldehyden, entstehen als Nebenprodukt Carbonsäuren, die einen Teil des Katalysators neutralisieren. Ein Prozeß von großer technischer Bedeutung ist beispielsweise die Kondensation von n-Butyraldehyd zu 2-Ethylhex-2-enal und Wasser. Dabei wird das Reaktionsgemisch üblicherweise wie folgt aufgearbeitet: Im ersten Schritt wird in einem Absitzbehälter die das Produkt enthaltende organische Phase von der wäßrigen Phase (Katalysatorlösung und Reaktionswasser) getrennt. Aufgrund der Polarität der in den Nebenreaktionen entstehenden organischen Säuren sowie der als Katalysator eingesetzten Base finden sich diese beiden Komponenten hauptsächlich in der wäßrigen Phase. Eine direkte Zuführung dieser wäßrigen Phase zur Kläranlage ist daher auf Grund der hohen Belastung mit Basen und organischen Bestandteilen oft nicht wünschenswert. Zudem muß, bedingt durch das Ausschleusen der Base mit der wäßrigen Phase aus dem Prozeß, zur Gewährleistung einer konstanten Katalysatorenkonzentration ständig frische Base dem Prozeß zugeführt werden, was kostenintensiv ist und dem eigentlichen Begriff Katalysator widerspricht.

Aus WO 92/07648 ist ein Verfahren zur Rückgewinnung von Natronlauge aus Prozeßwassern der oben genannten Art bekannt. Bei diesem Verfahren, welches die Aufbereitung der bei der Aldolkondensation anfallenden wäßrigen Phase zur Aufgabe hat, werden Kationenaustauschermembranen eingesetzt. Die wäßrige Phase enthält bei diesem Verfahren die Natriumsalze der bei der Aldolisierung als Nebenprodukte gebildeten organischen Säure bzw. des Alkohols. Diese Lösung wird in einer Zweikammermembranelektrolysezelle durch die Anodenkammer geführt. Bei angelegtem elektrischen Feld wandern die Metallkationen in die Kathodenkammer und reagieren mit den an der Kathode gebildeten Hydroxid-Ionen zum Natriumhydroxid. Bei diesem Verfahren wird also nur die Natronlauge als Katalysator abgetrennt. Im Anodenkreislauf bleibt eine wäßrige Lösung zurück, die überwiegend nur die organische Säure bzw. den Alkohol enthält. Die Entsorgung dieser Lösung ist aufwendig, da die organischen Bestandteile nur in geringen Konzentrationen vorliegen und die Lösung somit nicht direkt der thermischen Entsorgung zugeführt werden kann. Auch die Rückgewinnung der in geringen Konzentrationen vorliegenden organischen Säuren ist nicht lohnend.

Aus DE 196 04 903 ist ein Verfahren zur Abtrennung von Lauge aus dem bei der Aldolkondensation anfallenden Produkt bekannt, welches nach dem Prinzip der Dreikammerelektrolyse bzw. -elektrodialyse arbeitet. Bei diesem Verfahren wird die das Produkt enthaltende Phase, nach Abtrennung der wäßrigen Phase, durch die mittlere Kammer der Elektrolysezelle geführt, welche durch eine Anionenaustauschermembran und eine Kationenaustauschermembran begrenzt wird. Im elektrischen Feld wandern im Fall von Natronlauge die $Na^+$-Ionen durch die Kationenaustauschermembran und bilden in der Kathodenkammer mit dem an der Kathode entstehenden $OH^-$-Ionen Natronlauge. Durch die Anionenaustauschermembran wandern die in der mittleren Kammer enthaltenen $OH^-$-Ionen in die Anodenkammer und reagieren mit den an der Anode entstehenden $H^+$-Ionen zu Wasser. Bei diesem Verfahren zur Abtrennung von Natronlauge wird die Base aus dem Produkt entfernt, jedoch werden die in der wäßrigen Phase enthaltene Base sowie die organischen Bestandteile nicht aufgearbeitet.

Bei beiden oben genannten Verfahren verarmt die zu behandelnde Phase im Laufe der Elektrolyse bzw. Elektrodialyse an gelöstem Metallhydroxid, und die Leitfähigkeit der Lösung nimmt mit Fortschreiten der Elektrolyse bzw. Elektrodialyse ab. Dies hat zur Folge, daß zur Abtrennung von in der wäßrigen Lösung noch vorhandenen Bestandteilen ein immer größer werdender Leistungseintrag notwendig wird.

Eine weitere bekannte Möglichkeit zur Behandlung von organische Bestandteile enthaltenden wäßrigen Lösungen ist das Ansäuern der Lösung, bis sich eine Phasentrennung ergibt. Dabei werden jedoch nur die Hochsieder aus der Lösung entfernt, die organischen Säuren verbleiben weiterhin in der wäßrigen Phase. Zudem erfolgt eine weitere Aufsalzung des Stoffstroms der wäßrigen Lösung, die die Entsorgung schwieriger gestaltet.

Der Erfindung liegt daher die Aufgabe zugrunde, ein einfaches Verfahren zur Behandlung von Basen und organische Säuren enthaltenden wäßrigen Lösungen bereitzustellen, daß die Basen und organischen Säuren aus der Lösung abgetrennt und zusammen mit der behandelten wäßrigen Lösung in einer zur Weiterverarbeitung oder Wiederverwendung geeigneten Form zur Verfügung stellt.

Es wurde nun überraschenderweise gefunden, daß die Behandlung von Basen und organische Säuren enthaltenden wäßrigen Lösungen durch eine gleichzeitige Abtrennung von Basen und organischen Säuren mittels elektrochemischer Verfahren wesentlich vereinfacht wird.

Gegenstand der vorliegenden Erfindung ist daher ein Verfahren zur Behandlung von Basen und organische Säuren enthaltenden wäßrigen Lösungen, das gekennzeichnet ist durch eine gleichzeitige Abtrennung von Basen und organischen Säuren mittels eines elektrochemischen Verfahrens.

Mit Hilfe des erfindungsgemäßen Verfahrens können unabhängig von ihrer Herkunft alle wäßrigen Lösungen von Basen und organischen Säuren behandelt werden, insbesondere jedoch solche, die bei Aldolisierungsreaktionen anfallen.

Bei diesen in bekannter Weise durchgeführten basenkatalysierten Aldolkondensationen, wie z. B. der Herstellung von $\alpha,\beta$-ungesättigten Carbonylverbindungen, entstehen aufgrund des Reaktionsmechanismus je 2 mol eingesetzten Aldehyds bzw. Ketons 1 mol Wasser. Zusätzlich wird die Base als wäßrige Lösung zur Reaktion hinzugegeben. Nach der Reaktion liegen eine organische Phase und eine wäßrige Phase vor. Zur Abtrennung des gewünschten Produkts bedient man sich in der Regel der Phasentrennung mittels Phasenabscheider. Die organische Phase enthält in der Hauptsache das gewünschte Produkt, während die wäßrige Phase den eingesetzten Katalysator sowie organische Bestandteile, die bei Nebenreaktionen der Aldolkondensation häufig anfallen, enthält. Zu nennen ist hier im besonderen die Disproportionierungsreaktion der Aldehyde bzw. Ketone, die auch als Cannizarro-Reaktion bekannt ist. Bei dieser Reaktion entstehen aus zwei Molekülen Aldehyd bzw. Keton ein Molekül Carbonsäure und ein Molekül Alkohol, deren Kohlenstoffkettenlänge von der des eingesetzten Aldehyds bzw. Ketons abhängig ist. Die organischen Säuren sind bis zu einer Kettenlänge von 5 Kohlenstoffatomen gut wasserlöslich, so daß sie bei der Phasentrennung hauptsächlich in der wäßrigen Phase verbleiben. Diese wäßrige Lösung des basischen Katalysators und organischen Säuren muß vor einer Weiter- oder Abgabe gewöhnlich nachbehandelt werden. Erfindungsgemäß erfolgt diese Behandlung durch, ein elektrochemisches Verfahren zur Trennung der Basen und organischen Säuren von der wäßrigen Lösung.

Die Trennung der Basen und organischen Säuren aus wäßrigen Lösungen wird durch zwei Ausführungsarten des erfindungsgemäßen elektrochemischen Verfahrens, der Elektrolyse und der Elektrodialyse, erreicht.

Bei der elektrolytischen Ausführungsart wird die Stofftrennung dadurch erreicht, daß die zu behandelnde wäßrige Lösung in eine zwischen der Anoden- und der Kathodenkammer angeordnete Kammer eingebracht wird, wobei die Kammer von der Anodenkammer von zumindest einer Anionenaustauschermembran und von der Kathodenkammer von zumindest einer Kationenaustauschermembran getrennt ist. Es können handelsübliche Membranen verwendet werden. Als Anionenaustauschermembran kann z. B. die Membran AHA-2 der Firma Tokuyama Soda Ltd. und als Kationenaustauschermembran z. B. die Membran C66 10 F der Firma Tokuyama Soda Ltd. eingesetzt werden.

Die Kathodenkammer ist vorzugsweise in einen Vorlage-Kreislauf eingebunden, in dem Base, vorzugsweise die in der zu behandelnden Lösung schon vorhandenen Base, vorgelegt wird. Die Kathodenkammer wird im Gegenstrom oder im Gleichstrom, vorzugsweise im Gleichstrom, zum Lösungsstrom durch die mittlere Kammer durchströmt. Die Anodenkammer, in der organische Säure, vorzugsweise die in der zu behandelnden wäßrigen Lösung schon vorhandene Säure, vorgelegt wird, ist vorzugsweise ebenfalls in einen Vorlage-Kreislauf eingebunden. Die Anodenkammer wird ebenfalls im Gegenstrom oder im Gleichstrom, vorzugsweise im Gleichstrom, zum Lösungsstrom durch die mittlere Kammer durchströmt.

In der Anodenkammer und der Kathodenkammer befindet sich jeweils mindestens eine Elektrode, nämlich eine Anode in der Anodenkammer bzw. eine Kathode in der Kathodenkammer. Die Kathode besteht aus einem für Elektrolysen bekannterweise verwendeten Material, vorzugsweise Stahl. Die Anode besteht erfindungsgemäß vorzugsweise aus Stahl, Platinmohr, Platin, Graphit, Mischoxid, oder sie besteht aus einer Kombination dieser Bestandteile, rein oder aufgetragen auf oder eingebracht in ein Trägermaterial, vorzugsweise Titan.

Durch Anlegen einer elektrischen Spannung entsteht ein elektrisches Feld zwischen den Elektroden. Erfindungsgemäß wandern unter dem Einfluß des Feldes die Kationen, im Fall z. B. der basenkatalysierten Octenalherstellung aus Butanal mit Natronlauge als Base die Natrium-Ionen, durch die Kationenaustauschermembran in Richtung der Kathode und die Anionen, vorzugsweise organische Säurereste, durch die Anionenaustauschermembran in Richtung der Anode. An der Kathode in der Kathodenkammer bilden die Natrium-Ionen mit den an der Elektrode gemäß der Formel

$$H_2O + 1e^- \rightarrow OH^- + \tfrac{1}{2}H_2$$

entstehenden Hydroxidionen Natronlauge. An der Anode reagieren die in die Anodenkammer gewanderten negativ geladenen Säurereste mit den an der Elektrode gemäß der Formel

$$H_2O \rightarrow 2H^+ + \tfrac{1}{2}O_2 + 2e^-$$

entstehenden $H^+$-Ionen zur Säure. Durch die vorgenannten Prozesse werden von der zu behandelnden Basen und organische Säuren enthaltenden Lösung in der mittleren Kammer die Basen und organischen Säuren abgetrennt und diese in der Kathodenkammer bzw. der Anodenkammer (bzw. gegebenenfalls in den entsprechenden Kreisläufen) angereichert. Das Verfahren eignet sich also vorzüglich zur gleichzeitigen Behandlung von Basen und organischen Säuren enthaltenden wäßrigen Lösungen. Es ist - je nach Behandlungsdauer - eine fast vollständig von Basen und organischen Säuren befreite wäßrige Lösung erhältlich, welche ohne weitere Behandlung im Prozeß weiterverwendet oder einer Kläranlage zugeführt werden kann.

Mit Fortschreiten der Elektrolyse verarmt die wäßrige Lösung in der mittleren Kammer an gelösten Ionen. Die Ionenkonzentration in der Kathodenkammer nimmt dagegen mit Fortschreiten der Elektrolyse zu, da die im Falle von NaOH gebildete Base sofort dissoziiert. In der Anodenkammer verändert sich die Ionenkonzentration im Laufe der Elektrolyse nur unwesentlich, da die durch die Anionenaustauschermembran gewanderten Säurereste mit den an der Anode entstehenden Wasserstoff-Ionen rekombinieren. Die Ionenkonzentration ist deshalb im wesentlichen von der Dissoziationskonstante der in der Säurekammer enthaltenen Säure abhängig.

Aus den vorgenannten Gründen ist die Leitfähigkeit zu Beginn der Elektrolyse in der wäßrigen Lösung groß, während sie in der Anoden- und Kathodenkammer gering ist bzw. durch die Konzentration an Base und organischen Säuren der in den Vorlagen vorgelegten Lösungen bestimmt ist. Mit Fortschreiten der Elektrolyse steigt die Leitfähigkeit in der Kathodenkammer an und nähert sich dem bei konstanter Stromstärke maximal möglichen Wert an, der sich aus dem Löslichkeitsprodukt der Base errechnen läßt. Die Leitfähigkeit in der Anodenkammer bleibt im Verlauf der Elektrolyse nahezu konstant und ist im Vergleich zur Leitfähigkeit in der Kathodenkammer gering. Erfindungsgemäß wird daher in einer bevorzugten Ausführung des erfindungsgemäßen Verfahrens zur Steigerung der Leitfähigkeit der Lösung in der Anodenkammer eine Säure, vorzugsweise eine starke Mineralsäure, wie z.B. Schwefelsäure oder eine Base, vorzugsweise die in der zu behandelnden Lösung schon vorhandene Base, zugesetzt. Dadurch wird gewährleistet, daß die Ionenkonzentration und damit die Leitfähigkeit im Anodenkreislauf über die gesamte Behandlungsdauer nahezu konstant bleibt und dadurch ein höherer Energieeintrag nicht notwendig wird. Die Konzentration der Base in der Anodenlösung, vorzugsweise dieselbe Base, die in der zu behandelnden wäßrigen Lösung vorliegt, liegt erfindungsgemäß bevorzugt zwischen 0,01 mol/l und 1 mol/l, im besonderen aber zwischen 0,1 mol/l und 0,5 mol/l. Die Leitfähigkeit der zu behandelnden wäßrigen Lösung wird als Maß für das Fortschreiten des Prozesses genutzt.

Durch Einstellen einer Stromdichte von größer 100 bis 200 A/m$^2$ können zwei zusätzliche Behandlungseffekte erzielt werden. Zum einen kann die Kolbe-Reaktion an der Anode ausgenutzt werden, um die organischen Säuren elektrochemisch gemäß der Formeln

$$R\text{-}COO^- \rightarrow R\bullet + 1e^- + CO_2 \text{ und } 2R\bullet \rightarrow R\text{-}R$$

(R steht für einen beliebigen organischen Rest) durch Abspaltung von $CO_2$ in wasserunlösliche Kohlenwasserstoffe aufzuspalten. Da die entstehenden Kohlenwasserstoffe in der Hauptsache wasserunlöslich sind, können diese zum Beispiel in einem im Anodenkreislauf angeordneten Phasenabscheider von der wäßrigen Phase abgetrennt und einer Entsorgung oder Weiterverarbeitung zugeführt werden. Durch die Wahl der angelegten Spannung besteht bei diesem Verfahren also die Möglichkeit, je nachdem, welche organischen Säuren im Aldolisierungsprozeß entstehen, zu entscheiden, ob in der Hauptsache die Säure oder ein Teil der Säure als gemäß oben angegebener Formel zugänglicher Kohlenwasserstoff gewonnen werden sollen.

Der zweite Effekt, den sich das erfindungsgemäße Verfahren je nach Ausführung zu Nutze machen kann, basiert wahrscheinlich auf einer induzierten Konvektionsströmung in den Membranen. Überraschenderweise werden aus der zu behandelnden wäßrigen Lösung bei der Elektrolyse sogar neutrale organische Verbindungen abgetrennt. Diese Verbindungen treten oftmals als Nebenprodukte bei Aldolisierungsreaktionen in der wäßrigen Phase neben Basen und organischen Säuren auf. Aufgrund des Effekts wandern die neutralen organischen Verbindungen mit den Ionen bei angelegtem elektrischem Feld durch die Anionenaustauschermembran oder die Kationenaustauschermembran aus der mittleren Kammer, welche die zu behandelnde wäßrige Lösung enthält, in die Anoden- bzw. Kathodenkammer, wo sie ebenfalls durch Phasentrennung abgeschieden werden können. Die so erhaltenen neutralen organischen Verbindungen können wieder einer separaten Entsorgung oder Weiterverarbeitung zugeführt werden.

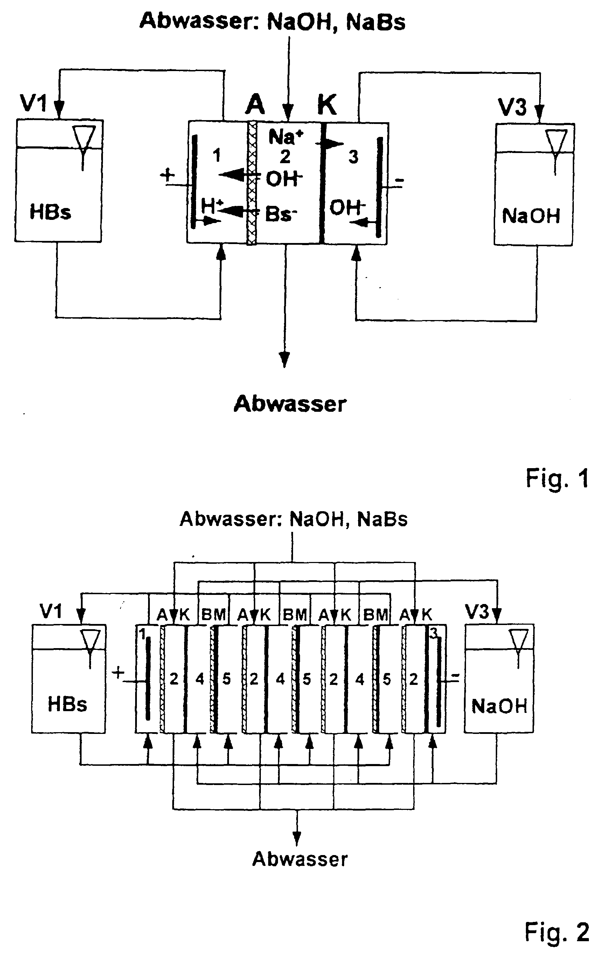

Die zweite Ausführungsart des erfindungsgemäßen Verfahrens ist die Elektrodialyse, die vorzugsweise eingesetzt wird, wenn größere Volumina an Lösungen behandelt werden sollen oder die Behandlung der Basen und organische Säuren enthaltenden Lösung in kürzerer Zeit erfolgen soll. Zu diesem Zweck wird die Anzahl der Kammern im Elektrolysemodul in der Weise erhöht, daß zwischen die äußeren Kammern, welche die Elektroden, welche denen in der elektrolytischen Ausführungsart des erfindungsgemäßen Verfahrens entsprechen, aufnehmen, statt einer Kammer, die die zu behandelnde Lösung enthält, eine der Formel $X = 1 + 3 \cdot n$ gehorchende Anzahl X an Kammern eingefügt wird, wobei n eine Variable, die jede natürliche Zahl und 0 annehmen kann, darstellt. Diese Kammern werden so angeordnet, daß neben den Elektrodenkammern mindestens eine Kammer, die die zu behandelnde Lösung enthält, liegt. Für n = 0 nimmt X den Wert 1 an, was gleich bedeutend mit der elektrolytischen Ausführungsart des erfindungsgemäßen Verfahrens ist. Für n = 1 nimmt X den Wert 4 an, das bedeutet, daß auf die Anodenkammer erst eine die zu behandelnde wäßrige Lösung enthaltende Kammer, dann eine Base aufnehmende Kammer, dann eine Säure aufnehmende Kammer und schließlich wieder eine Kammer mit der zu behandelnden wäßrigen Lösung folgt. Den Abschluß dieses Moduls bildet die Kathodenkammer. Für n größer 1 wird das Elektrodialysemodul entsprechend um n Einheiten bestehend aus einer Basekammer, einer Säurekammer und einer die zu behandelnde Lösung enthaltenden Kammer erweitert. Figur 2 zeigt ein Elektrodialysemodul, bei dem n den Wert 3 annimmt.

Ebenso wie bei der elektrolytischen Ausführungsart sind auch bei der elektrodialytischen Ausführungsart des erfindungsgemäßen Verfahrens die Kathodenkammer und die Basenkammern, die die Base aufnehmen sollen, gemeinsam oder getrennt, vorzugsweise gemeinsam, bevorzugt in einen Vorlage-Kreislauf eingebunden, in dem Base, vorzugsweise die Base, die in der zu behandelnden Lösung schon vorhanden ist, vorgelegt wird. Die Kathodenkammer wird im Gegenstrom oder im Gleichstrom, vorzugsweise im Gleichstrom, zum Strom in den die zu behandelnde Lösung führenden Kammern durchströmt. Die Basekammern werden ebenfalls im Gegenstrom oder im Gleichstrom, vorzugsweise im Gleichstrom, zum Strom in den die zu behandelnde Lösung führenden Kammern durchströmt. Die Anodenkammer und die die Säure aufhehmenden Kammern werden bevorzugt gemeinsam oder getrennt, vorzugsweise gemeinsam, in einen Vorlage-Kreislauf eingebunden, in dem Säure, vorzugsweise die Säure, die in den zu behandelnden wäßrigen Lösung schon vorhanden ist, vorgelegt wird. Die Anodenkammer wird im Gegenstrom oder im Gleichstrom, vorzugsweise im Gleichstrom, zum Strom in der die zu behandelnde Lösung führenden Kammern durchströmt. Die Säurekammern werden ebenfalls im Gegenstrom oder im Gleichstrom, vorzugsweise im Gleichstrom, zum Strom in den die zu behandelnde Lösung führenden Kammern durchströmt.

Während die Anodenkammer durch vorzugsweise eine Anionenaustauschermembran und die Kathodenkammer durch vorzugsweise eine Kationenaustauschermembran von den die zu behandelnde Lösung enthaltende Kammer getrennt sind, werden zur Trennung direkt nebeneinander angeordneter Base bzw. Säure aufnehmender Kammern, erfindungsgemäß bipolare Membranen eingesetzt. Diese produzieren im elektrischen Feld $H^+$- und Hydroxid-Ionen und geben diese in die benachbarten Säure- bzw. Basekreislaufkammern ab. Die Trennung der Basekammern von den die zu behandelnde wäßrige Lösung führenden Kammern geschieht durch Kationenaustauschermembranen, die Trennung der Säurekammern von den die zu behandelnde wäßrige Lösung führenden Kammern geschieht durch Anionenaustauschermembranen. Es können handelsübliche Membranen verwendet werden. Als Anionenaustauschermembran kann z. B. die Membran AHA-2 der Firma Tokuyama Soda Ltd., als Kationenaustauschermembran z. B. die Membran C66 10F der Firma Tokuyama Soda Ltd. und als bipolare Membran können Membrane der Firmen Aqualytics oder Tokuyama Soda Ltd. eingesetzt werden.

Durch Anlegen einer elektrischen Spannung entsteht ein elektrisches Feld zwischen den Elektroden. Erfindungsgemäß wandern unter dem Einfluß des Feldes die Kationen, im Fall z. B. der basenkatalysierten Octenalherstellung aus Butanal mit Natronlauge als Base die Natrium-Ionen, durch die Kationenaustauschermembran in Richtung der Kathode zur Kathode bzw. zu einer bipolaren Membran und die Anionen, vorzugsweise organische Säurereste, durch die Anionenaustauschermembran in Richtung der Anode zur Anode bzw. zu einer bipolaren Membran. An der Kathode in der Kathodenkammer und an den bipolaren Membranen auf der Basenkreisseite bilden die Natrium-Ionen mit den an der Kathode gemäß der Formel

$$H_2O + 1e^- \rightarrow OH^- + \tfrac{1}{2}H_2$$

bzw. an den bipolaren Membranen durch Aufspaltung von Wasser in $OH^-$ - und $H^+$-Ionen entstehenden Hydroxidionen Natronlauge. An der Anode bzw. den bipolaren Membranen reagieren die in die Anodenkammer bzw. die Säurekammer gewanderten negativ geladenen Säurereste mit den an der Anode gemäß der Formel

$$H_2O \rightarrow 2H^+ + \tfrac{1}{2}O_2 + 2e^-$$

bzw. den bipolaren Membranen durch Aufspaltung von Wasser in $OH^-$- und $H^+$-Ionen entstehenden $H^+$-Ionen zur Säure. Durch die vorgenannten Prozesse werden von der zu behandelnden, Basen und organische Säuren enthaltenden Lösung die Basen und organischen Säuren abgetrennt und die Basen in der Kathodenkammer und in den Basekammern bzw. die organischen Säuren in der Anodenkammer und den Säurekammern angereichert. Das Verfahren eignet sich also vorzüglich zur gleichzeitigen Behandlung von größeren Volumina von Basen und organischen Säuren enthaltenden, wäßrigen Lösungen. Es entsteht je nach Behandlungsdauer und - intensität eine fast vollständig von Basen und organischen Säuren befreite wäßrige Lösung, welche ohne weitere Behandlung weiterverarbeitet oder einer Kläranlage zugeführt werden kann.

Mit Fortschreiten der Elektrodialyse verarmt die wäßrige Lösung in den die zu behandelnde Lösung führenden Kammern an gelösten Ionen. Die Ionenkonzentration in der Kathodenkammer und in den Basekammern nimmt dagegen in der Regel mit Fortschreiten der Elektrodialyse zu, da die gebildete Base gewöhnlich sofort dissoziiert. In der Anodenkammer und in den Säurekammern verändert sich die Ionenkonzentration im Laufe der Elektrodialyse nur unwesentlich, da die durch die Anionenaustauschermembran gewanderten Säurereste mit den an der Anode bzw. den bipolaren Membranen entstehenden Wasserstoff-Ionen rekombinieren. Die Ionenkonzentration ist deshalb im wesentlichen von der Dissoziationskonstante der in den Säurekammern enthaltenen Säure abhängig.

Aus den vorgenannten Gründen ist die Leitfähigkeit zu Beginn der Elektrolyse in der wäßrigen Lösung groß, während sie in der Anoden- und Kathodenkammer bzw. in den Säure- und Basekammern gering ist bzw. durch die Konzentration an Basen und organischen Säuren der in den Vorlagen vorgelegten Lösungen bestimmt ist. Mit Fortschreiten der Elektrolyse steigt die Leitfähigkeit in der Kathodenkammer und in den Basekammern an und nähert sich dem bei konstanter Stromstärke maximal möglichen Wert an. Die Leitfähigkeit in der Anodenkammer und in den Säurekammern bleibt im Verlauf der Elektrolyse in der Regel nahezu konstant und ist im Vergleich zur Leitfähigkeit in der Kathodenkammer und in den Basekammern gering. Erfindungsgemäß wird daher in einer bevorzugten Ausführung des erfindungsgemäßen Verfahrens zur Steigerung der Leitfähigkeit der Lösung in der Anodenkammer und in den Säurekammern wie bei der Elektrolyse eine Base zugesetzt. Durch die Zugabe von Basen in die Anodenkammer und in die Säurekammern wird also gewährleistet, daß die Ionenkonzentration und damit die Leitfähigkeit im Anodenkreislauf über die gesamte Behandlungsdauer nahezu konstant bleibt und dadurch ein höherer Energieeintrag nicht notwendig wird. Die Konzentration der Basen in der Anodenlösung bzw. im Säurekreislauf, vorzugsweise derselben Base, die in der zu behandelnden wäßrigen Lösung vorliegt, liegt erfindungsgemäß bevorzugt zwischen 0,01 mol/l und 1 mol/l, im besonderen aber zwischen 0,1 mol/l und 0,5 mol/l. Die Leitfähigkeit der zu behandelnden wäßrigen Lösung wird als Maß für das Fortschreiten des Prozesses genutzt.

Durch Einstellen einer erfindungsgemäß über 100 bis 1 000 A/m$^2$ liegenden Stromdichte können zwei zusätzliche Behandlungseffekte erzielt werden. Zum einen kann die Kolbe-Reaktion an der Anode ausgenutzt werden, um die organischen Säuren elektrochemisch gemäß der Formeln

$$R\text{-}COO^- \rightarrow R\cdot + 1e^- + CO_2 \text{ und } 2R\cdot \rightarrow R\text{-}R$$

(R steht für einen beliebigen organischen Rest) durch Abspaltung von $CO_2$ in wasserunlösliche Kohlenwasserstoffe aufzuspalten. Da die entstehenden Kohlenwasserstoffe in der Hauptsache wasserunlöslich sind, können diese zum Beispiel in einem im Anodenkreislauf angeordneten Phasenabscheider von der wäßrigen Phase abgetrennt und einer Entsorgung oder Weiterverarbeitung zugeführt werden. Durch die Wahl der angelegten Spannung besteht bei diesem Verfahren also die Möglichkeit, je nachdem, welche organischen Säuren im Aldolisierungsprozeß entstehen, zu entscheiden, ob die Säure oder ein Teil der Säure als gemäß oben angegebener Formel zugänglicher Kohlenwasserstoff gewonnen werden soll. Da die Kolbe-Reaktion nur direkt an der Anode stattfindet, kann bei der elektrodialytischen Ausführungsart des erfindungsgemäßen Verfahrens nur ein kleiner Teil der Säure in einen Kohlenwasserstoff umgewandelt werden.

Der zweite Effekt, den sich das erfindungsgemäße Verfahren je nach Ausführung zu Nutze machen kann, basiert wahrscheinlich auf einer induzierten Konvektionsströmung in den Membranen. Überraschenderweise werden aus der zu behandelnden wäßrigen Lösung bei der Elektrolyse sogar neutrale organische Verbindungen abgetrennt. Diese Verbindungen treten oftmals als Nebenprodukte bei Aldolisierungsreaktionen in der wäßrigen Phase neben Basen und organischen Säuren auf. Durch den oben genannten Effekt wandern die neutralen organischen Verbindungen mit den Ionen durch die Anionenaustauschermembran bzw. die Kationenaustauschermembran aus der Kammer, welche die zu behandelnde wäßrige Lösung enthält, in die Anoden- und Kathodenkammern bzw. die Base- und Säurekammern, wo sie ebenfalls durch Phasentrennung abgeschieden werden können. Die so erhaltenen neutralen organischen Verbindungen können wieder einer Entsorgung oder Weiterverarbeitung zugeführt werden.

Vorzugsweise werden die Basen nach Abtrennung aus der zu behandelnden wäßrigen Lösung außerhalb der Zelle durch dort vorgelegte reine Basen aufgenommen und auf diese Weise aufkonzentriert und wiedergewonnen. Die so aufgearbeiteten Basen werden vorzugsweise dem Aldolisierungsprozeß wieder als Katalysator zugeführt. Die aus der zu behandelnden wäßrigen Lösung abgetrennten organischen Bestandteile im Säurekreislauf werden aufkonzentriert und entweder direkt der thermischen Entsorgung zugeführt oder weiterverarbeitet, z. B. mittels eines Phasenabscheiders in wasserlösliche und wasserunlösliche Verbindungen getrennt und einzeln entsorgt oder weiterverarbeitet. Die erfindungsgemäß behandelte wäßrige Lösung kann einer Kläranlage, einer Verbrennung oder einer weiteren Verarbeitung zugeführt werden.

Das erfindungsgemäße Verfahren wird vorzugsweise bei Umgebungsdruck und bevorzugt bei Temperaturen zwischen 20 °C und 90 °C, besonders bevorzugt bei 30 °C bis 60 °C, durchgeführt.

Das erfindungsgemäße Verfahren kann kontinuierlich oder diskontinuierlich auf elektrolytischem oder elektrodialytischem Weg ausgeführt werden. Die Stärke des angelegten elektrischen Feldes ist unter anderem von den apparativen Bedingungen und den Stoffpaarungen abhängig und ist so zu bemessen, daß der erfindungsgemäße Effekt erzielt wird. Vorzugsweise wird eine Stromdichte von 100 bis 1 000 A/m$^2$ verwendet.

In den Figuren 1 und 2 sind beispielhaft zwei Ausführungsarten des erfindungsgemäßen Verfahrens dargestellt, ohne daß das Verfahren auf diese beschränkt ist.

Figur 1 stellt eine elektrolytische Ausführungsart des erfindungsgemäßen Verfahrens dar. Das Elektrolysemodul wird durch eine Anionenaustauschermembran A und eine Kationenaustauschermembran **K** in die drei Kammern **1**, **2** und **3** aufgeteilt. Die mittlere Kammer 2 wird von der zu behandelnden wäßrigen Lösung, in diesem Beispiel von einem Abwasserstrom, der NaOH und das Natriumsalz der Buttersäure NaBs enthält, durchströmt. Die Anodenkammer **1**, in welcher die mit + gekennzeichnete Anode angeordnet ist, ist in einen Vorlage-Kreislauf eingebunden und wird von einer die organische Säure HBs enthaltenden Lösung, welche aus der Vorlage **V1** vorgelegt wird, durchströmt. Die Kathodenkammer **3**, in welcher die mit - gekennzeichnete Kathode angeordnet ist, ist in einen Vorlage-Kreislauf eingebunden und wird von einer NaOH enthaltenden Lösung, welche aus der Vorlage **V3** vorgelegt wird, durchströmt. Im elektrischen Feld wandern die $Na^+$-Ionen durch die Kationenaustauschermembran K in die Kathodenkammer 3 und bilden dort mit den an der Kathode (-) gebildeten $OH^-$-Ionen Natronlauge. Die an der Anode (+) entstehenden $H^+$-Ionen reagieren mit den durch die Anionenaustauschermembran **A** gewanderten Anionen $OH^-$ und $Bs^-$ zu organischer Säure und Wasser.

Eine elektrodialytische Ausführungsart des erfindungsgemäßen Verfahrens ist in Figur 2 dargestellt. Das Elektrolysemodul wird durch vier Anionenaustauschermembranen **A**, vier Kationenaustauschermembranen **K** und drei bipolare Membranen **BM** in eine Kathodenkammer **1**, eine Anodenkammer **3**, vier die zu behandelnde Lösung führende Kammern **2**, drei Basenkammern **4** und drei Säurekammern **5** aufgeteilt. Die Kammern **2** werden von der zu behandelnden wäßrigen Lösung, in diesem Beispiel von einem Abwasserstrom, der NaOH und das Natriumsalz der Buttersäure NaBs enthält, durchströmt. Die Anodenkammer **1**, in welcher die mit (+) gekennzeichnete Anode angeordnet ist, und die Säurekammern **5** werden von einer die organiche Säure HBs enthaltende Lösung, welche aus der Vorlage **V1** vorgelegt wird, im Gleichstrom durchströmt. Die aus den Säurekammern **5**, die im Gleichstrom zu den Kammern **2** durchströmt werden, austretenden Lösungen vereinigen sich nach dem Durchströmen der Kammern mit der Lösung aus der Anodenkammer und werden wieder in einer Vorlage **V1** gesammelt. Aus dieser Vorlage wird die Lösung den Kammern zugeführt, wobei die Lösung auf die Kammern **1** und **5** aufgeteilt wird. Die Kathodenkammer **3**, in welcher die mit (-) gekennzeichnete Kathode angeordnet ist, wird von einer NaOH enthältenden Lösung, welche aus der Vorlage **V3** vorgelegt wird, im Gleichstrom beschickt. Die Basenkammern **4** werden ebenfalls mit der in der Vorlage **V3** vorgelegten Lösung im Gleichstrom beschickt. Die Lösungen der Kathodenkammer und der Basenkammern vereinigen sich nach Durchfließen des Elektrodialysemoduls und werden wieder in der Vorlage **V3** gesammelt. Im elektrischen Feld wandern die $Na^+$-Ionen aus den Kammern **2** durch die Kationenaustauschermembran **K** in die Kathodenkammer **3** bzw. in die Basekammern **4** und bilden dort mit den an der Kathode (-) bzw. den bipolaren Membranen **BM** gebildeten $OH^-$-Ionen Natronlauge. Die an der Mode (+) bzw. an den bipolaren Membranen **BM** entstehenden $H^+$-Ionen reagieren mit den durch die Anionenaustauschermembran **A** aus den Kammern **2** in die Kammer **1** bzw. die Kammern **5** gewanderten Anionen $OH^-$ und $Bs^-$ zu organischer Säure und Wasser.

Die erfindungsgemäßen Verfahren werden durch die folgenden Beispiele näher erläutert, ohne darauf beschränkt zu sein. In den Beispielen wird das Verfahren anhand der Elektrolyse veranschaulicht, da diese auch die Grundlage der Ausführung als Elektrodialyse und weiterer Varianten darstellt.

Beispiel 1:

Reinigung des Reaktionswassers aus der Octenalproduktion

In einem Dreikammerelektrolysemodul nach Figur 1, dessen Kammern durch eine Anionenaustauschermembran vom Typ AHA-2 und eine Kationenaustauschermembran vom Typ C66 10F der Firma Tokuyama Soda Ltd., welche jeweils eine Membranfläche von 100 $cm^2$ aufwiesen, getrennt sind, wurde mit einer Anode aus Titan, beschichtet mit Mischoxid, mit einer Oberfläche von 100 $cm^2$ sowie einer Kathode aus Edelstahl Streckmetall mit einer Oberfläche von 100 $cm^2$ bei einer Stromdichte von 350 $A/m^2$ eine Elektrolyse bei einer Temperatur von 40 bis 50 °C durchgeführt. In dem Anodenkreislauf wurde eine 1 %ige wäßrige Natronlaugelösung vorgelegt, im Kathodenkreislauf wurde eine 5 %ige wäßrige Buttersäurelösung vorgelegt. In der mittleren Kammer wurde Octenalabwasser, welches unter anderem Buttersäure und verschiedene Aldehyde enthielt, im Kreis geführt. Die Leitfähigkeiten der Lösungen in allen drei Kammern wurden während des gesamten Elektrodialysevorgangs permanent mit Hilfe einer Meßvorrichtung der Firma WTW bestimmt.

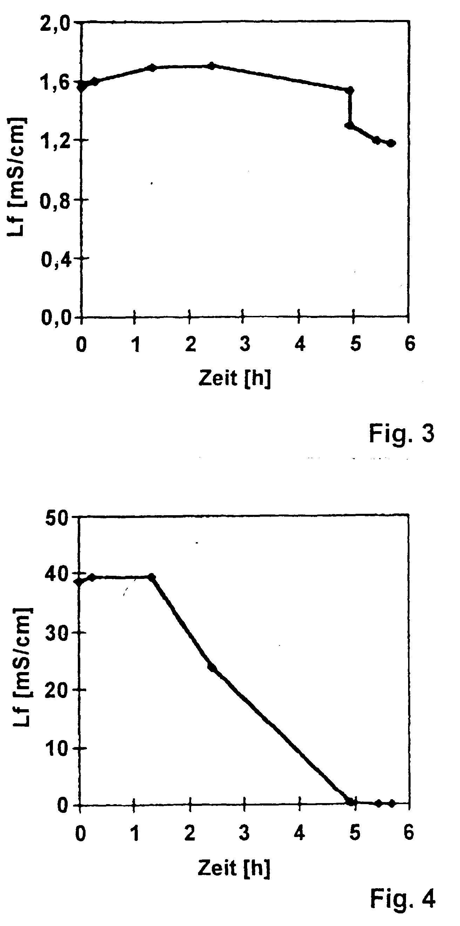

Im Laufe der Elektrodialyse nahm die Leitfähigkeit im Octenalkreislauf bis auf sehr kleine Werte (0,1 mS/cm) ab. Im Anodenkreislauf blieb die Leitfähigkeit nahezu konstant, während im Kathodenkreislauf die Leitfähigkeit mit fortschreitender Dauer der Elektrodialyse bis auf einen maximalen Wert von > 180 mS/cm ansteigt. Die Figuren 3 bis 5 geben den zeitlichen Verlauf der Leitfahigkeiten in den drei Kammern wieder. Figur 3 zeigt den Leitfähigskeitverlauf in der Anodenkammer, Figur 4 zeigt den Leitfähigkeitsverlauf in der die zu behandelnde Lösung enthaltenden Kammer und Figur 5 stellt den Leitfähigkeitsverlauf in der Kathodenkammer dar.

Zu Beginn und zum Ende der Elektrolyse wurden Proben aus der mittleren Kammer gezogen und der Gesamtkohlenstoffgehalt sowie der Natriumgehalt der Lösung bestimmt. Die Meßwerte sind in der untenstehenden Tabelle abzulesen.

Tabelle

| Analysenergebnisse der Proben, entnommen aus der mittleren Elektrolysekammer Analysen auf Gesamtkohlenstoffgehalt | | | | |
|---|---|---|---|---|
| Probe 1 (Beginn der Elektrolyse) | 0,93 | % C | 8,77 | g Kohlenstoff |
| Probe 2 (Ende der Elektrolyse) | 0,098 | % C | 0,81 | g Kohlenstoff |
| Analysen auf Natriumgehalt | | | | |
| Probe 1 (Beginn der Elektrolyse) | 1,4 | % Na | 13,20 | g Natrium |
| Probe 2 (Beginn der Elektrolyse) | 0,01 | % Na | 0,08 | g Natrium |

Besonders auffallend ist die deutliche Abnahme des Gesamtkohlenstoffgehalts in der mittleren Kammer. So sank im Verlauf der Elektrolyse der Gehalt an Kohlenstoff von 0,93 % auf 0,098 %. Dies ist um so bedeutender, da eigentlich nur 0,6 % als organische Säure vorgelegt wurden und somit der Restkohlenstoffgehalt 0,33 %, verursacht durch neutrale organische Verbindungen, betragen hat. Da dieser Wert deutlich unterschritten wurde, bedeutet dies, daß auch neutrale organische Verbindungen, durch die Membranen aus der mittleren Kammer wandern.

Beispiel 2:

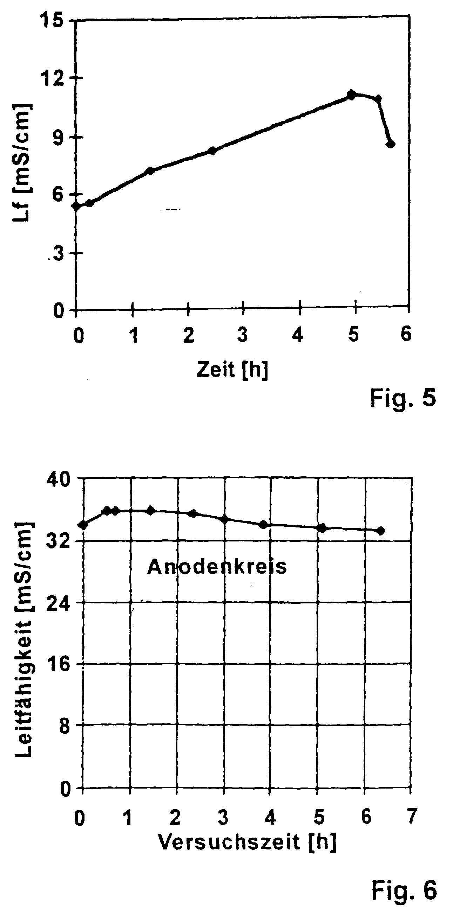

In einem wie in Fig. 2 dargestellten Elektrodialysemodul, wurde mit den gleichen Versuchsparametern eine Elektrodialyse durchgeführt. Zusätzlich wurde in diesem Beispiel zur Buttersäure im Anoden bzw. Säurekreislauf solange Natronlauge zugefügt, bis der pH-Wert bei ca. 6,0 lag. Die Messung der Leitfähigkeit im Anoden- bzw. Säurekreislauf ergab eine wesentlich höhere Leitfähigkeit gegenüber der in Beispiel 1 bestimmten. Die Meßwerte der Leitfähigkeiten in den drei Kreisläufen werden graphisch in den Figuren 6 bis 8 aufgetragen gegen die Versuchszeit wiedergegeben.

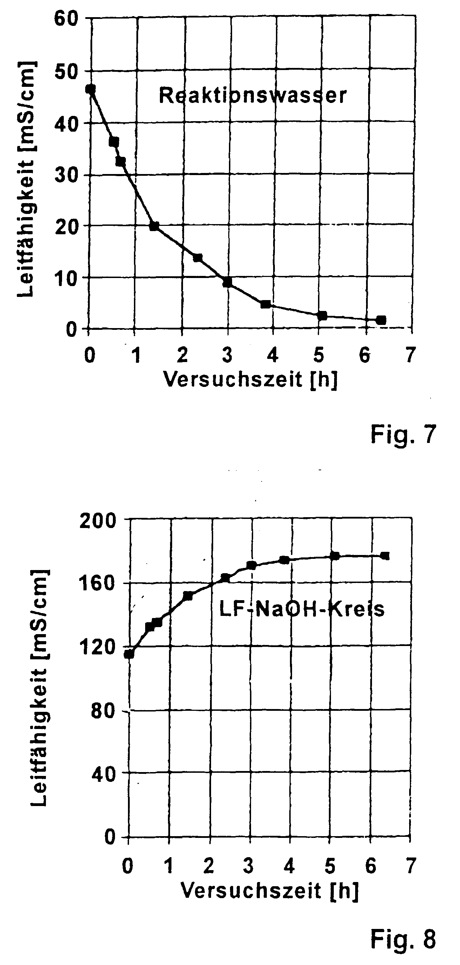

Figur 6 zeigt den Leitfähigkeitsverlauf in der Anodenkammer bzw. den Säurekammern, Figur 7 den Leitfähigkeitsverlauf in den die zu behandelnde Lösung enthaltenden Kammern und Figur 8 den Leitfähigkeitsverlauf in der Kathodenkammer bzw. dem Basenenkreislauf. Die Zugabe von Natronlauge zum Säurekreislauf bedingt also eine wesentlich höhere und fast gleichbleibende Leitfähigkeit in der Anodenkammer. Daraus resultierend wird der benötigte Gesamtenergieeintrag zur Behandlung der wäßrigen Lösung halbiert.

**Patentansprüche**

1. Verfahren zur Behandlung von Basen und organische Säuren enthaltenden wäßrigen Lösungen, gekennzeichnet durch eine gleichzeitige Abtrennung von Basen und organischen Säuren mittels eines elektrochemischen Verfahrens.

2. Verfahren nach Anspruch 1, gekennzeichnet durch eine gleichzeitige Abtrennung von Basen und organischen Säuren mittels Elektrolyse.

3. Verfahren nach Anspruch 1, gekennzeichnet durch eine gleichzeitige Abtrennung von Basen und organischen Säuren mittels Elektrodialyse.

4. Verfahren nach Anspruch 2,
   dadurch gekennzeichnet,
   daß die zu behandelnde Lösung in eine zwischen der Anoden- und Kathodenkammer 1 und 3 angeordnete Kammer 2 eingebracht wird, wobei die Kammer 2 von der Anodenkammer 1 durch zumindest eine Anionenaustauschermembran A und von der Kathodenkammer 3 durch zumindest eine Kationenaustauschermembran K getrennt ist.

5. Verfahren nach Anspruch 3,
   dadurch gekennzeichnet,
   daß bei der Elektrodialyse als Vorlage zur Aufnahme von Kationen bzw. Anionen aus der zu behandelnden Lösung dienende Kammern 4 und 5 zwischen den Kammern 2, die mit der zu behandelnden Lösung beschickt werden, durch bipolare Membranen BM getrennt werden.

6. Verfahren nach zumindest einem der Ansprüche 1 bis 5,
dadurch gekennzeichnet,
daß in den Kammern, die zur Aufnahme der Anionen dienen, Säure vorgelegt wird, der Base zugesetzt ist.

7. Verfahren nach zumindest einem der Ansprüche 1 bis 6,
dadurch gekennzeichnet,
daß zusätzlich neutrale organische Verbindungen aus der zu behandelnden Lösung abgetrennt werden.

8. Verfahren nach zumindest einem der Ansprüche 1 bis 7,
dadurch gekennzeichnet,
daß Elektroden aus Stahl, Platinmohr, Graphit, Mischoxid, reinem Platin oder aus einer Kombination dieser Bestandteile in reiner Form oder aufgetragen auf oder eingebracht in ein Trägermaterial verwendet werden.

9. Verfahren nach zumindest einem der Ansprüche 1 bis 8,
dadurch gekennzeichnet,
daß das Verfahren bei 20 bis 90 °C durchgeführt wird.

10. Verfahren nach Anspruch 9,
dadurch gekennzeichnet,
daß das Trennverfahren bei 30 bis 60 °C durchgeführt wird.

11. Verfahren nach zumindest einem der Ansprüche 1 bis 10,
dadurch gekennzeichnet,
daß das Verfahren kontinuierlich durchgeführt wird.

12. Verfahren nach zumindest einem der Ansprüche 1 bis 10,
dadurch gekennzeichnet,
daß das Verfahren diskontinuierlich durchgeführt wird.

13. Verfahren nach zumindest einem der vorherigen Ansprüche,
dadurch gekennzeichnet,
daß organische Verbindungen an der Anode elektrochemisch gespalten werden.

14. Verfahren nach zumindest einem der Ansprüche 1 bis 13 zur Abtrennung des basischen Katalysators und organischer Säuren aus wäßrigen Lösungen, die bei Aldolisierungsreaktionen anfallen.

Abwasser: NaOH, NaBs

V1

A    K

+    Na⁺
     2
     OH⁻

H⁺    Bs⁻

OH⁻

−

V3

HBs

NaOH

Abwasser

Fig. 1

Abwasser: NaOH, NaBs

V1

A K   BM   A K   BM   A K   BM   A K

+    2  4  5  2  4  5  2  4  5  2    −

V3

HBs

NaOH

Abwasser

Fig. 2

Fig. 3

Fig. 4

Fig. 5

Fig. 6

Fig. 7

Fig. 8